# EUROPEAN PATENT SPECIFICATION

(11) **EP 3 882 504 B1**
(45) Date of publication and mention of the grant of the patent: **02.08.2023**
(21) Application number: 21161981.2
(22) Date of filing: 11.03.2021
(51) Int. Cl.: F16M 11/04, F16M 13/02

(54) **SYSTEM FOR POSITIONING A VIEWING SCREEN**
SYSTEM ZUR POSITIONIERUNG EINES BETRACHTUNGSSCHIRMS
SYSTÈME DE POSITIONNEMENT D'UN ÉCRAN DE VISUALISATION

(30) Priority: 16.03.2020 NL 2025133
(43) Date of publication of application: 22.09.2021
(73) Proprietor: Vogel's IP B.V., 5628 DB Eindhoven (NL)
(72) Inventor: BOHNEN, Martijn Joseph Jacobus Marie, 5628 DB EINDHOVEN (NL); TIMMERMANS, Louis Walterus, 5628 DB EINDHOVEN (NL)
(74) Representative: Algemeen Octrooi- en Merkenbureau B.V.

(56) References cited:
- DE-A1- 3 023 974

## Description

The present invention relates to a system for positioning a viewing screen. With such systems, it is known to use a screen body and a base body. The screen body is then, on the one hand, configured to secure a viewing screen thereto, for example as a result of the fact that securing holes according to the VESA system are provided. On the other hand, the screen body is configured such that it is or at least will be connected to a base body. This connection may be semi-permanent in the sense that it is not intended in principle to be detached, except for example in case of a move. The connection between the screen body and the base body may also be of the hingable type, for example in order to be able to direct a screen towards a viewer.

German publication DE 3023974 A1 describes a positioning system for an electronic device such as a loudspeaker.

The invention aims to provide a system which distinguishes itself by its constructional simplicity and the possibility of a relatively simple assembly process, as a result of which the risk of mistakes during assembly is reduced. To this end, the invention provides a system according to Claim 1. The measure of the spring member and the second hook edge forming an integral part of the retaining body means that no separate assembly of the spring member is required and that the spring member does not form a separate component. The functionality which can be incorporated in the retaining body as a result of the invention thus reduces the number of required components for the system and may, in addition, facilitate assembly of the system during its production. The two guided members may extend towards each other from the legs of a part, which is U-shaped in cross section, of the other of the base body and the screen body.

In one embodiment which can be produced in a relatively simple way, the spring member comprises at least one resilient lip, and preferably two resilient lips which, more preferably, can be pressed towards each other elastically to bring about assembly of the retaining body.

When using two resilient lips, these are, in a further embodiment, provided, on the sides facing away from each other, with projections which extend in recesses in legs of a part, which is U-shaped in cross section, of the other of the base body and the screen body.

The retaining body may advantageously be a plastic product which has been produced by means of injection-moulding.

In a further embodiment, the retaining body has the same orientation in the free position and in the retaining position.

In a further embodiment, the base body comprises the first hook edge and a suspension edge, and the screen body comprises a suspension hook for suspending the screen body from the suspension edge of the base body via the suspension hook, and wherein the retaining body is displaceable with respect to the suspension hook between the retaining position in which the first hook edge engages with the first hook edge of the base body if the screen body is suspended from the suspension edge via the suspension hook, and the free position in which the first hook edge is free from the first hook edge if the screen body is suspended from the suspension edge via the suspension hook.

In a further embodiment, the second hook edge is displaceable with respect to the suspension hook from the free position to a waiting position, in which waiting position the retaining body has a different orientation than in the retaining position, and wherein, due to the base body acting as a stop for the retaining body, the retaining body is configured to displace the retaining hook from the waiting position to the retaining position at least partly in a swinging manner. In this case, the waiting position may be situated between the retaining position and the free position.

When using an interacting combination of a guide and guided member as described above and a second hook edge which is displaceable to a waiting position, as has also been described above, the guided member may be configured to interact with the guide during displacement of the retaining hook from the free position to the waiting position in such a way that the orientation of the retaining body changes during said displacement.

In a further embodiment, the screen body comprises an elongate tensioning element which is connected to the retaining body in order to pull the retaining body from the retaining position to the free position counter to the action of the spring member. In this case, the tensioning element may be connected to the retaining body by means of a click-fit connection. In case two resilient lips are used, as described above, the tensioning element may furthermore partially extend between the two resilient lips.

In order to provide a system which is suitable to tilt a viewing screen which is suspended from the system up and down, the screen body may comprise a first screen body part and a second screen body part tiltably connected to the first screen body part, wherein the system furthermore comprises a locking mechanism for locking a tilting position of the second screen body part, the locking mechanism comprising a bracket which, on one side, is hingably connected to one of the first screen body part and the second screen body part and, on the other side, extends in a slotted hole through which the second end moves during tilting of the second screen body part with respect to the first screen body part, the locking mechanism furthermore comprising a locking body for locking the bracket, at its second end, to a desired longitudinal position inside the slotted hole.

In one embodiment, the locking body comprises an eccentric body which is connected to the bracket so as to be swivelable between a locking position and a non-locking position and which, in the locking position, presses the bracket or at least a part connected thereto against a part of the peripheral edge of the slotted hole in order to prohibit displacement of the bracket inside the slotted hole, and which, in the non-locking position, leaves the bracket or at least a part connected thereto free from the peripheral edge of the slotted hole in order to allow displacement of the bracket inside the slotted hole. In this case, discrete tilting positions may be defined if the slotted hole comprises a number of recesses for accommodating the bracket or at least a part connected thereto in the locking position of the eccentric body.

A locking body as described above, more specifically if the locking body comprises an eccentric body, may also advantageously be used with prior-art systems, irrespective of the specific way in which a base body and a screen body of such a system are connected to each other.

The invention will be explained in more detail by means of the description of a number of possible embodiments of positioning systems configured as suspension systems according to the invention with reference to the following figures, in which:
Fig. 1 shows an isometric view of the rear side of a suspension system according to the invention in a vertical position;
Fig. 2 shows an isometric view according to Fig. 1 of one of two screen bodies of the system according to Fig. 1;
Fig. 3 shows a part of Fig. 2 in more detail in a partly exploded view;
Fig. 4 shows an isometric view of a retaining body as used for each of the two screen bodies of the suspension system according to Fig. 1;
Figs. 5a to 5d show a side view or at least a vertical sectional view of the retaining body according to Fig. 4 in four successive positions during removal of an associated screen body from a base body of the system;
Fig. 6 shows the suspension system in a tilted position in the isometric view according to Fig. 1;
Fig. 7 shows a further retaining body associated with a screen body as used in the suspension system according to Figs. 1 to 6 in the isometric view according to Fig. 1;
Figs. 8a to 8c show a side view or at least a vertical sectional view of three successive positions during use of the further retaining body according to Fig. 7, wherein the position according to Fig. 8a corresponds to the vertical position according to Fig. 1 and the position according to Fig. 8c corresponds to the tilted position according to Fig. 6;
Fig. 9 shows an isometric view of the front side of a second suspension system according to the invention;
Fig. 10 shows a part of a base body and a tilting body forming part of a screen body of the suspension system according to Fig. 9;
Figs. 11a to 11c show a side view or at least a vertical sectional view of three successive positions during tilting of the tilting body as illustrated in Fig. 10;

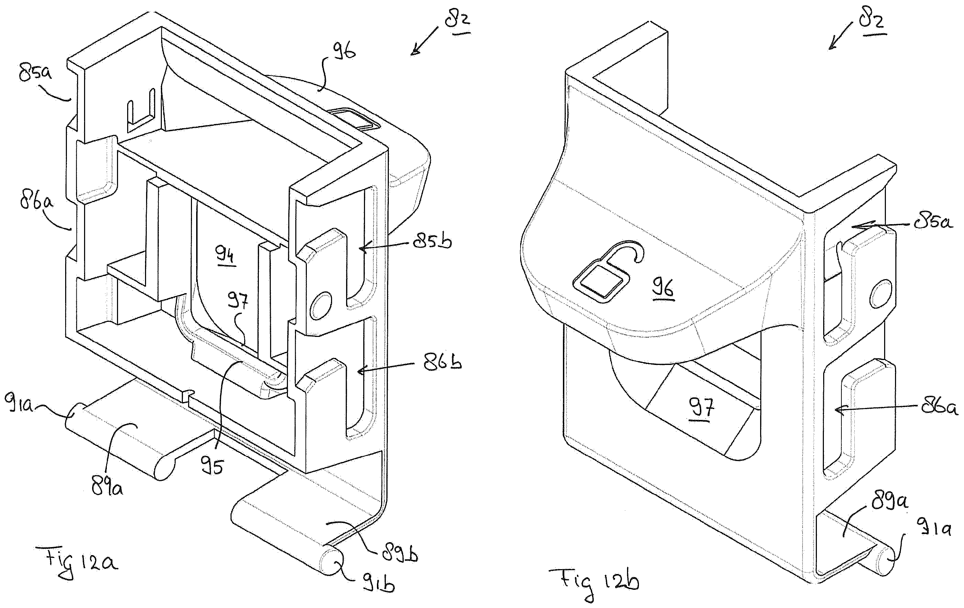

Figs. 12a and 12b show two isometric views of the rear side and the front side, respectively, of a retaining body part forming part of the suspension system according to Fig. 9.

Where relative terms, such as front side, rear side, bottom side and top side, have been used or will be used in the description above and below, these have to be interpreted from the perspective of a viewer facing a viewing screen which is secured to the respective suspension system. Where a reference numeral is followed by a letter a or b below in order thus to be able to refer to similar components, the same reference numeral without the letter a or b will be used insofar as the distinction between the respective similar components is not important.

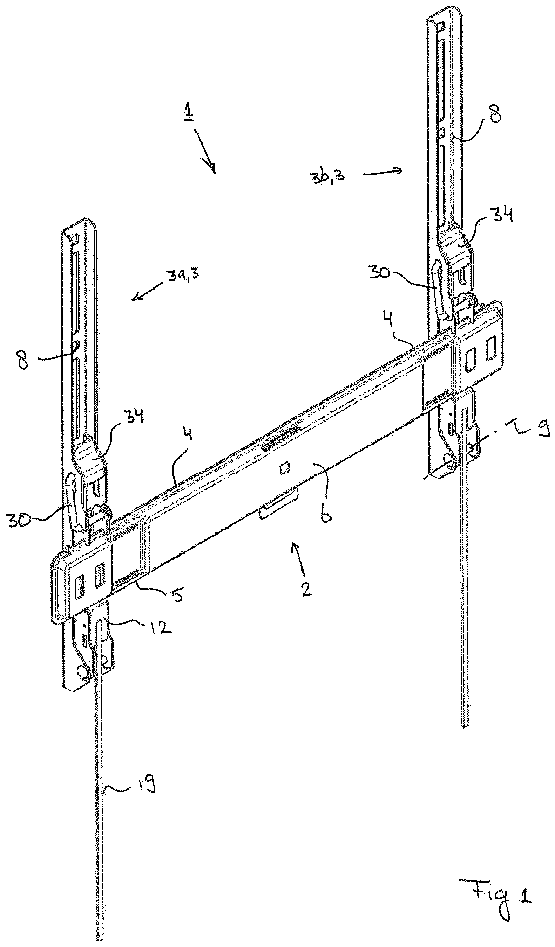

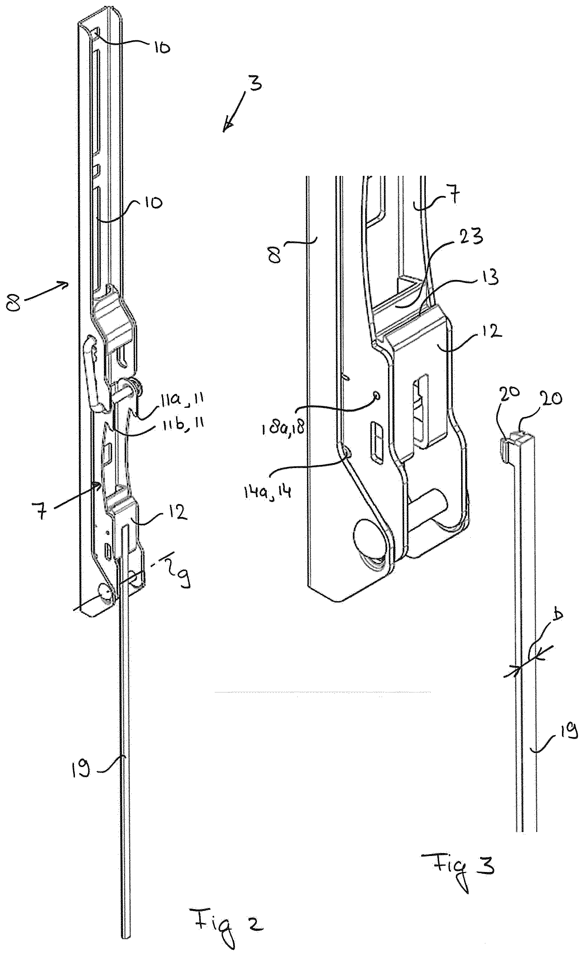

Suspension system 1 will be explained below by means of the description of Figs. 1 to 8c. Suspension system 1 comprises a base body 2 and two screen bodies 3a, 3b. The base body 2 is elongate in shape. The length direction of base body 2 is a practical form of the suspension system 1 oriented horizontally, wherein the base body 2 is secured by its rear side 6 to a wall or the like (not shown), for example using screws and plugs suitable for the purpose which extend into the respective wall through holes in the base body 2. On the top side, the base body 2 is provided with a horizontal suspension edge 4 and, on the bottom side, with a horizontal first hook edge 5. In the top view, the suspension edge 4 and first hook edge 5 are situated at a distance from the rear side 6 and thus in a practical form at a distance from the wall on which the base body 2 is secured.

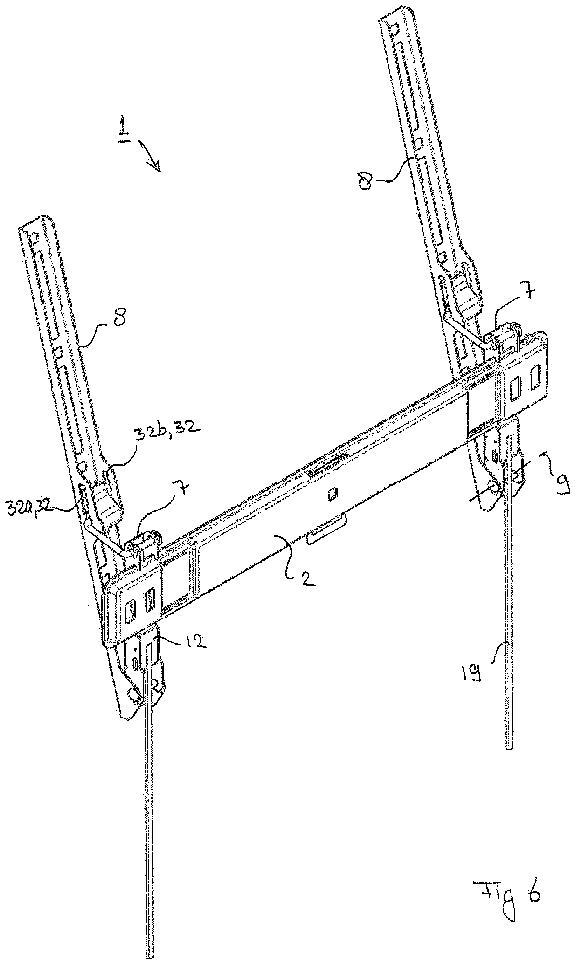

Each of the screen bodies 3 comprises a securing body 7 and a tilting body 8. Securing body 7 and tilting body 8 are each elongate in shape, with the respective length directions thereof being oriented vertically in the position of the suspension system 1 in Fig. 1. At their respective bottom ends, the securing body 7 and the tilting body 8 are connected to each other so as to be tiltable about pivot pin 9. This tilting action will be described in more detail in the below description by means of Figs. 6 to 8c.

In horizontal cross section, the securing body 7 and the tilting body 8 each have an at least substantially U-shaped cross section, in which, incidentally, the lengths of the legs of the respective U shapes across the respective lengths of the securing body 7 and of the tilting body 8 vary. The lengths of the respective bodies of the U shapes of the horizontal cross section of the securing body 7 and of the tilting body 8, which bodies connect the legs of the respective U shape to each other, are such that the legs of the U shape of the securing body 7 fit just inside the legs of the U shape of the tilting body 8. Various securing holes 10 are provided in the tilting body 8, such as, inter alia, slotted holes, so that a flat viewing screen may be secured to the front side of the respective tilting body 8 via the respective holes 10.

Two suspension hooks 11a, 11b are provided in the two legs of the U shape of every securing body 7, by means of which the respective screen body, more specifically the securing body 7 thereof, can be suspended from the suspension edge 4 of the base body 2, as can be seen in Figs. 1 and 6.

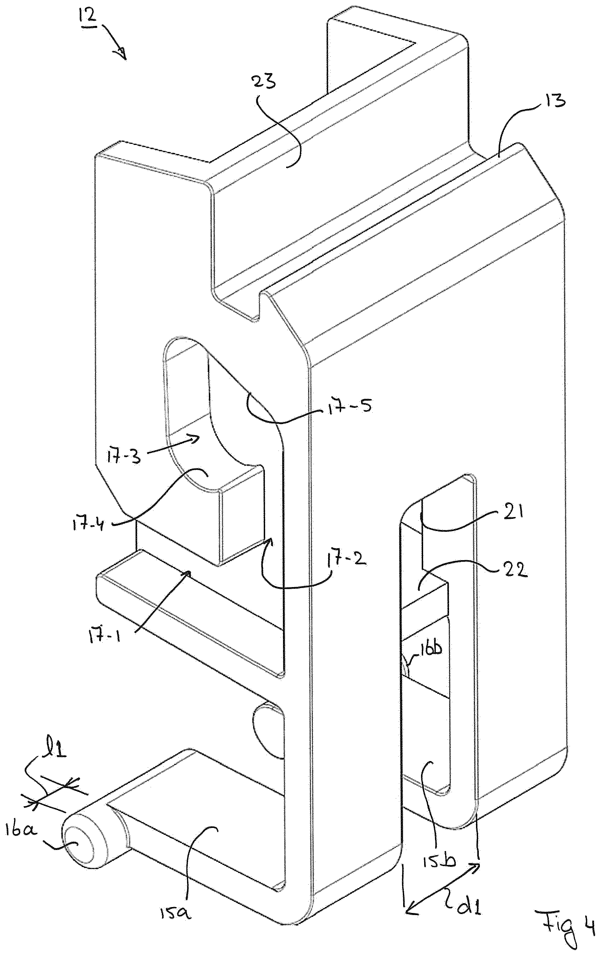

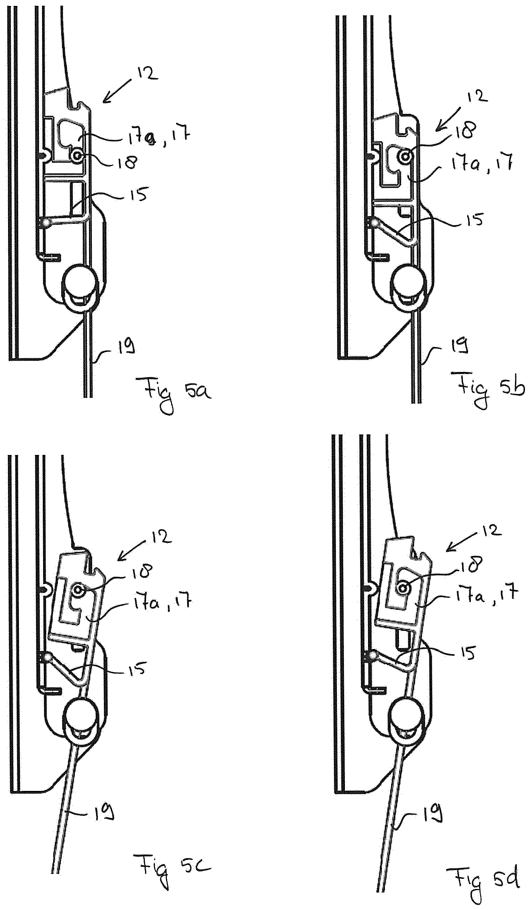

For each screen body 3, the suspension system 1 furthermore comprises a retaining body 12 (see also Fig. 4) which is provided under the suspension hooks 11, between the legs of the U shape of the associated securing body 7. Except for base body 2, securing bodies 7 and tilting bodies 8 which are made of steel, the retaining bodies 12 are made of plastic, such as polyamide, for example of the PA6 type, or of acrylonitrile butadiene styrene, and these are injection-moulded products. Each retaining body 12 comprises a second hook edge 13 which, as will be explained in more detail by means of Figs. 5a to 5d, engages with the first hook edge 5 under prestress. In this way, the connection between the base body 2 and a screen body 3, more specifically the securing body 7 thereof, is retained by means of retaining bodies 12. On the front side of the second hook edge 13, each retaining body 12 is provided with a stop face 23 (Fig. 4), with space being provided between second hook edge 13 and stop face 23 for the first hook edge 5 of the base body 2.

Two oppositely arranged bores 14a, 14b (bore 14b is not visible in the figures) are provided in the two legs of the U shape of each securing body 7. On their respective bottom sides, the retaining bodies 12 are each provided with two resilient lips 15a, 15b which are provided at a distance d1 apart. The free ends of the resilient lips 15a, 15b are provided with protruding pin parts 16a, 16 which are turned away from each other and whose respective lengths L are identical and are approximately equal to the thickness of the legs of the U shape of the securing body 7. In the assembled position, the pin parts 16 extend inside the aforementioned bores 14. For the purpose of assembling retaining body 12, the resilient lips 15 are resiliently pushed towards each other, as a result of which the distance between the ends of the pin parts 16 which are turned away from each other is temporarily smaller than the distance between the legs of the U shape of the securing body 7. From this position, the pin parts 16 are pushed towards the bores 14, where the pin parts 16 will click-fit into these bores 14 due to the spring force.

In addition, retaining body 12 is provided with a cam track 17a, 17b (cam track 17b not shown in the figures) on two opposite lateral faces which are mirror-symmetrical with respect to each other. Each cam track 17 has a horizontal part 17-1 which is open at the end situated on the front side and, at the end opposite thereto, adjoins a vertical part 17-2 of cam track 17 which itself, at the upper end thereof, adjoins chamber 17-3 of cam track 17. Chamber 17-3 is provided on the front side of the vertical part 17-2 and has a hollow bottom 17-4. The upper sides of the vertical part 17-2 and of chamber 17-3 merge into each other and together form a sloping flank 17-5.

Securing body 7 is provided with two pin-shaped cams 18a, 18b (cam 18b not shown in the figures) which are turned towards each other from the two legs of the U shape of the cross section of the securing body 7 and, in the assembled state, extend in an associated cam track 17 of the retaining body 12. Thus, during assembly of the retaining body 12, not only will the pin parts 16 be pressed together in order to fit between the legs of the U shape of the securing body 7, but the retaining body 12 will thus also be positioned in such a way with respect to the securing body 7 that the opening of the horizontal parts 17-1 of the two cam tracks 17, more specifically the open ends thereof, are situated exactly opposite the cams 18, so that the horizontal parts 17-1 can slide across these cams 18. In this case, the spring tension in the resilient lips 15 is such that, as is illustrated in Fig. 5a, the cams 18 are situated in the respective vertical parts 17-2 of the cam tracks 17 in a first rest position.

Suspension system 1 furthermore comprises a drawstring 19 for each of the retaining bodies 12, the top end of which drawstring 19 is provided with resilient click-fit teeth 20 which can cooperate with click-fit edges 21 of retaining body 12 in a click-fit manner. The click-fit edges 21 extend above stop face 22 (Fig. 4). The width b of the drawstrings 19 is virtually equal to distance d1, as a result of which the rear side of the drawstring 19 and the rear side of retaining body 12 are aligned with each other and visually form one surface, if the drawstrings 19 are connected to an associated retaining body 12 by means of a click-fit connection.

The retaining bodies 12 operate as follows: starting from the assembled state according to Fig. 5a in which the second hook edge 13 engages with first hook edge 5 (not shown in any more detail in Fig. 5a) of base body 2 in a locking manner and wherein the retaining bodies 12 are in the first rest position, a downward tensile force is exerted on the drawstring 19. As a result thereof, the resilient lips 15 will bend. More specifically, the resilient lips 15 will in this case be deformed elastically, as can be seen in Fig. 5b. In this case, the cams 18 will move towards the upper ends of the vertical parts 17-2 of the cam tracks 17 or, more specifically, as a matter of fact, these vertical parts 17-2 move with respect to the cams 18. The second hook edge 13 will end up out of range of the associated first hook edge 5 during this movement. When the downward tensile force on drawstring 19 is continued, cams 18 will strike against the sloping flanks 17-5 and move along these, as a result of which the retaining body 12 will pivot about the axes of pin parts 16 until the entire flank 17-5 has moved along the cams 18. The cams 18 are then situated in the chambers 17-3, as is illustrated in Fig. 5c. Subsequently discontinuing the tensile force on drawstring 19 makes the retaining body 12 move upwards again with respect to the associated securing body 7, due to the resilient action of lips 15, with cam 18 in chamber 17-3 coming to rest on the hollow bottom 17-4 thereof under some elastic prestress generated by the resilient lips 15 (Fig. 5d). From this situation, in which the retaining body 12 assumes a second, sloping, rest position, it is readily possible to pivot the screen bodies 3, with a flat viewing screen attached thereto, about the suspension edges 4 and to remove the screen bodies 3 together with the viewing screen from the base body 2.

Again bringing about a retaining connection between the screen bodies 3 and the base body 2 can easily be effected. To this end, the screen bodies 3 are suspended from the suspension edge 4 of the base body 2 by their suspension hooks 11, following which the bottom ends of the screen bodies 3 are pivoted in the direction of the base body 2, or the wall to which the base body 2 is attached. At a certain point, the stop faces 23 of the respective retaining bodies 12 will strike against the first hook edge 5, as a result of which the cams 18 are pushed out of the hollow bottoms 17-4 and into the vertical parts 17-2 of the cam tracks 17. In this case, the retaining body 12 will pivot back again from the sloping position in Fig. 5d to the vertical position in Fig. 5a. The resilient lips 15 are then given space to relax, so that the retaining situation from Fig. 5a is achieved again, in which the second hook edges 13 engage with the first hook edge 5.

While the tilting bodies 8 have a vertical orientation in Fig. 1, Fig. 6 shows the situation in which the tilting bodies 8 are tilted downwards about pivot pins 9. In order to limit the tilt angle, the system 1 comprises a U-shaped bracket 30 for every tilting body 8. In this case, one (horizontal) leg of the U-shaped bracket 30 extends through pivot holes which are provided above the suspension hooks 11 in the respective securing body 7, more specifically in the legs of the U shape of the cross section of the securing body 7. The other leg of the U shape of the bracket 30 extends through two mutually opposite slotted holes 32a, 32b in the legs of the U shape of the tilting body 8.

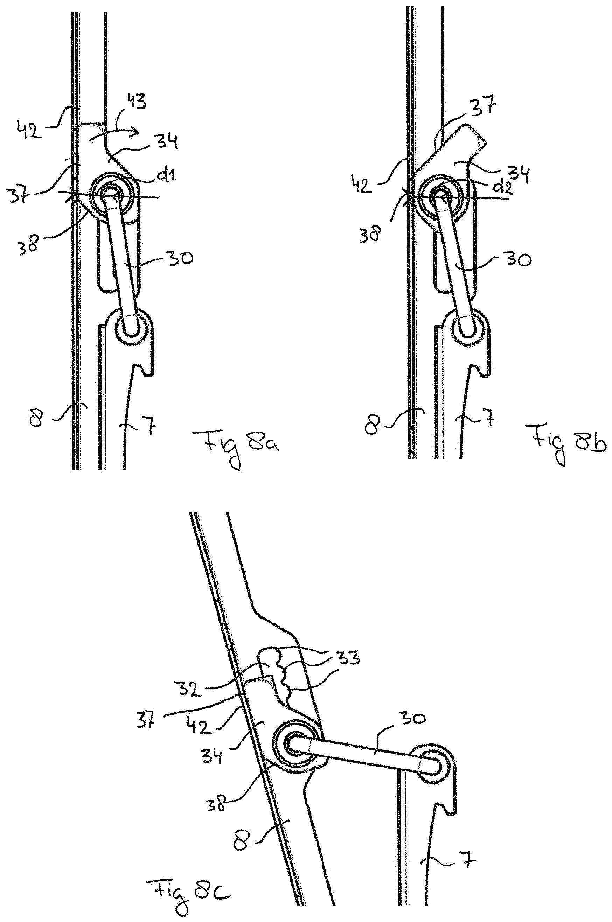

As has also been shown in Fig. 8c, the slotted holes 32, on their rear, are provided with a number of evenly distributed recesses 33. The recesses 33 are in this case configured to accommodate the leg of bracket 30 which extends through the slotted holes 32. If the respective leg is situated in the upper recess 33, tilting body 8 is oriented vertically, as is illustrated in Fig. 1. If the respective leg extends in the bottom recess 33, the tilting body 8 has assumed the maximum (downward) tilted position of suspension system 1, as is illustrated in Fig. 6.

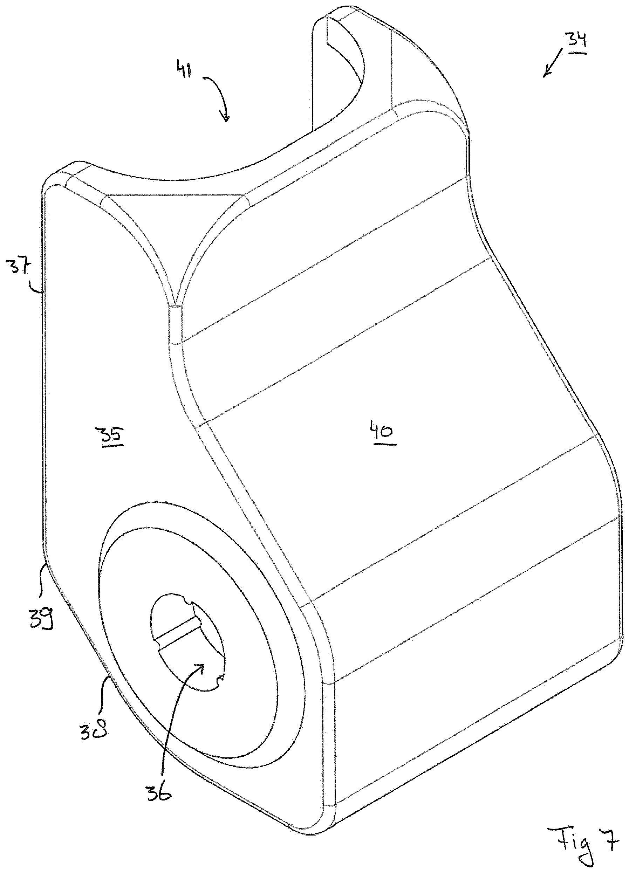

Furthermore, the suspension system 1 comprises a retaining body (Fig. 7) for each bracket 30, which is designed as an eccentric body 34 and is an injection-moulded product made of plastic, just like retaining body 12. Eccentric body 34 has two mutually opposite side walls 35 which are provided with pivot holes 36 through which the leg of bracket 30 which extends through slotted holes 32 extends. The side walls 35 are each delimited, inter alia, by a first stop edge 37 and a second stop edge 38 which adjoin each other via rounding 39. The two side walls 35 are connected to each other via an undulating connecting wall 40 which leaves a recess 41 free at the top side of the eccentric body 34 between the side walls 35.

Fig. 8a relates to the position from Fig. 1, in which the tilting bodies 8 are oriented vertically. Bracket 30, more specifically the upper leg thereof, is accommodated in the upper recess 33. The first stop edge 37 of the eccentric body 34 bears against the body part 42 of the U shape of the tilting body 8. Due to this abutment, displacement of the upper leg of the bracket 30 out of the upper recess 33 is blocked and the tilting body 8 is retained in the vertical orientation.

If a user wants to tilt the tilting bodies 8 downwards or actually, more specifically, the screen which is secured to the tilting arms 8, this may be achieved by the user engaging in the recess 41 of the eccentric body 34 with his finger. By means of a pulling movement, the user can make the eccentric body 34 pivot about the axis of the pivot holes 36 in the direction of arrow 43 until the position from Fig. 8b is reached. In this position, the second stop edge 38 bears against the body part 42 of the tilting body 8. Since the eccentric body 34 is dimensioned such that the horizontal distance d1 between the axis of pivot holes 36 and the first stop edge 37 is greater than the horizontal distance d2 between the aforementioned axis and the second stop edge 38, the upper leg of bracket 30 is given space to move out of the upper recess 33 and subsequently to move through the slotted hole 32 when tilting body 8 is tilted downwards. As soon as the tilting body 8 is at a desired tilt angle, the user can tilt the eccentric body 34 back again in the direction 44 about the axis of pivot holes 36, as a result of which the first stop edge 37 comes to lie against body part 42 again and the upper leg of bracket 30 is retained in a recess 33 again. In Fig. 8c, this is the bottom recess 33.

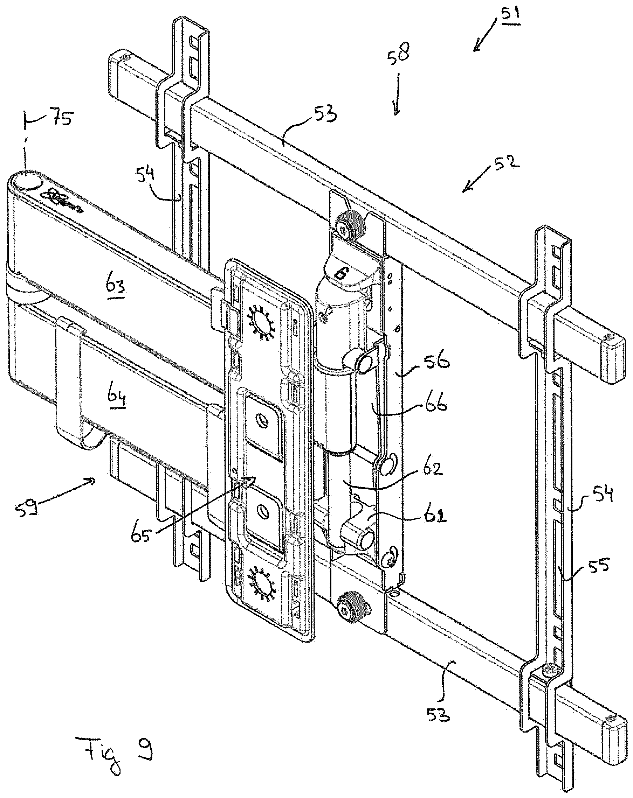

Suspension system 51 according to Fig. 9 comprises a composite base body 58 and a composite screen body 59 which is connected thereto so as to be tiltable about tilting pin 72. The base body 58 comprises a frame 52 which is configured to be attached to a wall. The frame 52 comprises girders 53, uprights 54 comprising holes 55 to secure the uprights and thus the entire frame 52 to a partition wall, and a central upright 56 which is secured to the two girders 53 at its mutually opposite ends. Upright 56 has a U-shaped cross section. Base body 58 furthermore comprises a perpendicular tilting body 61, one end of which is connected to the central upright 56 so as to be pivotable about pivot pin 71, near the bottom end thereof.

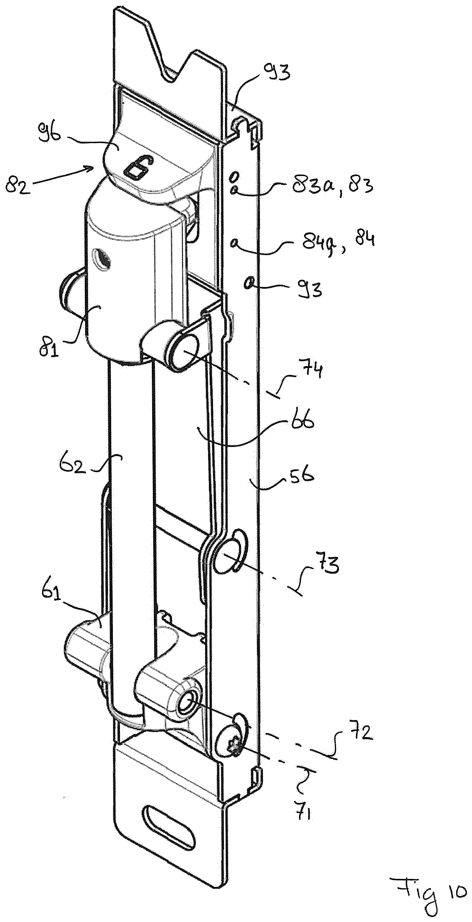

Screen body 59 comprises a rod-shaped tilting body 62 which is vertically oriented in Figs. 9 to 11 and, at the bottom end thereof, is connected to the tilting body 61 so as to be tiltable about tilting pin 72. System 51 furthermore comprises a tensile body 66 which, at the bottom end thereof, is connected to the central upright 56 so as to be pivotable about pivot pin 73 and, at an upper end thereof, is connected to the tilting body 62 so as to be tiltable about tilting pin 74, near the upper end thereof.

The screen body 59 of system 51 furthermore comprises two swivelling arms 63, 64 which are connected to each other so as to be swivelable with respect to each other about swivel pin 75, which extends parallel to the axis of tilting body 62. The first swivelling arm 63 is connected to the tilting body 62 so as to be swivelable about swivel pin 75, about the axis thereof. The screen body 59 furthermore comprises a securing body 65 which extends parallel to swivel pin 75, with the second swivelling body 64 being connected to an end thereof situated opposite swivel pin 75. Securing body 65 is configured to be secured to a flat viewing screen.

In order to retain the vertical orientation of the tilting body 62 and thus of the viewing screen which is connected to securing body 65, the suspension system 51 comprises a retaining system which comprises a first retaining body 81 and a second retaining body 82. In this case, the first retaining body 81 forms part of the screen body 59 and the second retaining body 82 forms of the base body 58.

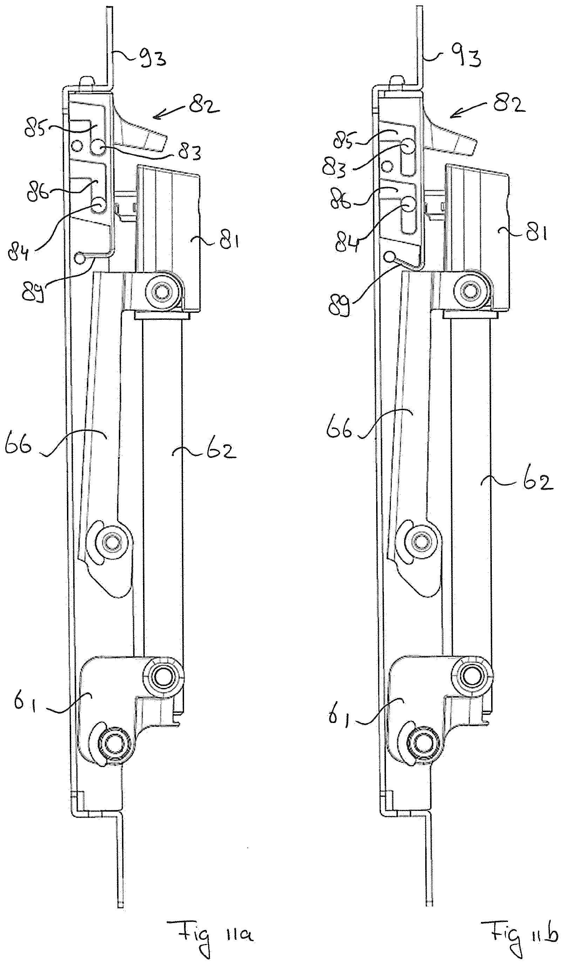

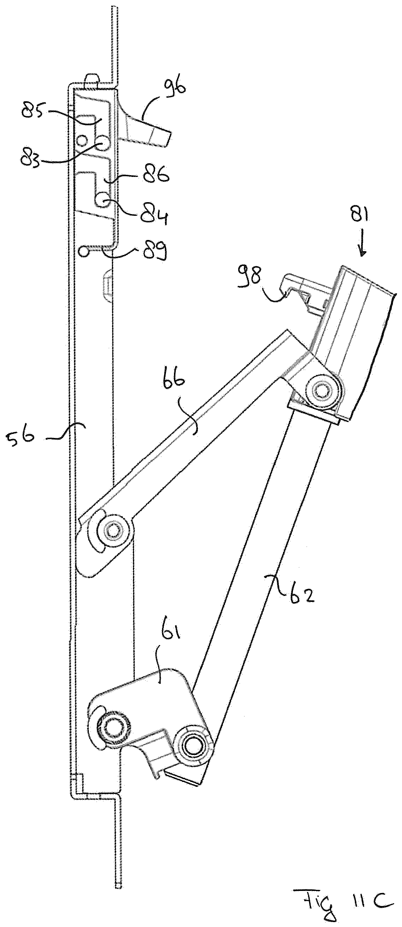

The first retaining body 81 concerns an injection-moulded plastic product and is provided with retaining hook 98 (Fig. 11c) on the side facing the second retaining body 82. The first retaining body 81 is rigidly connected to the tilting body 62 at the upper end thereof.

The second retaining body 82 also concerns a plastic injection-moulded product and is, at least partly, accommodated so as to be slidable up and down between the two legs of the U-shaped cross section of upright 56. For the purpose of the aforementioned slidability, mutually facing pin-shaped cams 83a, 83b and 84a, 84b (cams 83b and 84b are not shown in the figures) are provided at opposite positions in the aforementioned legs. These cams 83, 84 fall into vertically oriented cam track parts of respective cam tracks 85a, 85b and 86a, 86b which are provided in mutually opposite lateral faces of the second retaining body 82. The respective upper ends of the vertical cam track parts of the cam tracks 85, 86 adjoin horizontal cam track parts which are open at the side facing the body of the U shape of the upright 56 for assembly purposes.

On its bottom side, the second retaining body 82 comprises two resilient lips 89a, 89b which may, during assembly of the second retaining body 82, be pushed together and which are provided, on the sides turned away from each other, with pin parts 91a, 91b which are turned away from each other. The respective pin parts 91 extend in bores 93 which are provided in the two legs, opposite each other, of the U-shaped cross section of the upright 56. On the upper end of upright 56, the suspension system 51 is provided with an enclosing body 93 against which the top side of the second retaining body 82 strikes, at least in the unactuated position of the second retaining body 82, due to the resilient action of the resilient lips 89, 90.

The second retaining body 82 furthermore comprises a central opening 94 which is delimited on its bottom side by a horizontal hook edge 95. On the front side of hook edge 95, the second retaining body 82 comprises a rising ramp surface 97. In the retained vertical position of the tilting body 62, the retaining hook 98 of the first retaining body 81 extends through the central opening 94 and retaining hook 98 hooks behind hook edge 95.

The second retaining body 82 furthermore comprises a pressure face 96. By exerting a downward pressure force on pressure face 96, a user can compress the resilient lips 89, as a result of which the second retaining body 82 slides downwards between the legs of the upright 56 against the resilient action of resilient lips 89, 90. In this way, retaining hook 98 and hook edge 95 come apart and the tilting body 62 can tilt to a tilted position, as is illustrated in Fig. 11c. When the aforementioned pressure force on the pressure face 96 is discontinued, the second retaining body 82 will slide upwards again due to the resilient action of resilient lips 89, 90. If the tilting body 62 is tilted back to the vertical orientation, retaining hook 98 will strike against and move upwards via the ramp surface 97, as a result of which a downward force is exerted on the second retaining body 82 which causes the lips 89, 90 to be compressed and causes the second retaining body 82 to slide in a vertically downward direction until retaining hook 98 moves over hook edge 95 and retaining hook 98 will hook behind hook edge 95, due to the resilient action of lips 89, 90, and will thus retain the assumed vertical orientation of the tilting body 62.

## Claims

1. System (1; 51) for positioning a viewing screen, comprising a base body (2; 58), a screen body (3; 59) which, on the one hand, is configured to be rigidly connected, at least in one position of the screen body, to the base body (2; 58) and, on the other hand, is configured to secure a viewing screen thereto, and a retaining body (12; 82) for releasably retaining the rigid connection between the base body (2; 58) and the screen body (3; 59), wherein one of the base body (2; 58) and the screen body (3; 59) has a first hook edge (5; 98) and the retaining body (12; 81) has a second hook edge (13; 95), wherein the second hook edge (13; 95) is displaceable with respect to the other of the base body (2; 58) and the screen body (3; 59) between a retaining position in which the first hook edge (5; 95) and the second hook edge (13; 98) engage with each other, as a result of which or at least partly as a result of which the screen body (3; 59) is rigidly connected to the base body (2; 58), and a free position in which the first hook edge (5; 95) and the second hook edge (13; 98) are free from each other to such an extent that the screen body (3; 59) is displaceable with respect to the base body (2; 58), the system (1; 51) furthermore comprising a spring member (15; 89) which is operative to withstand displacement of the second hook edge (13; 89) from the retaining position to the free position, wherein the spring member (15; 89) and the second hook edge (13; 89) form an integral part of the retaining body (12, 81), **characterized in that**
the retaining body (12; 82) has a guide (17; 85, 86) and the other of the base body (2; 58) and the screen body (3; 59) has a guided member (18; 83, 84) which is configured to cooperate with the guide (17; 85, 86) during displacement of the displaceable second hook edge (13; 95) from the retaining position to the free position.

2. System according to Claim 1, wherein the spring member comprises at least one resilient lip (15; 89).

3. System according to Claim 2, wherein the spring member comprises two resilient lips (15a, 15b; 89a, 89b).

4. System according to Claim 3, wherein the two resilient lips (15a, 15b; 89a, 89b), on the sides facing away from each other, are provided with protrusions (16a, 16b; 91a, 91b) which extend in recesses (14; 93) in legs of a part, which is U-shaped in cross section, of the other of the base body (2; 58) and the screen body (3; 59).

5. System according to one of the preceding claims, wherein the retaining body (12; 82), on each of two mutually opposite sides thereof, comprises a guide (17a, 17b; 85a, 85b, 86a, 86b) and wherein the other of the base body (2; 58) and the screen body (3; 59) has a guided member (18a, 18b; 83a, 83b, 84a, 84b) for each guide (17a, 17b; 85a, 85b, 86a, 86b), the two guided members (18a, 18b; 83a, 83b, 84a, 84b) preferably extending towards each other from legs of a part, which is U-shaped in cross section, of the other of the base body (2; 58) and the screen body (3; 59).

6. System according to one of the preceding claims, wherein the retaining body (12; 82) has the same orientation in the free position and in the retaining position.

7. System according to one of the preceding claims, wherein the base body (2) comprises the first hook edge (5) and a suspension edge (4), and the screen body (3) comprises a suspension hook (11) for suspending the screen body (3) from the suspension edge (4) of the base body (2) via the suspension hook (11), and wherein the retaining body (12) is displaceable with respect to the suspension hook (11) between the retaining position in which the first hook edge (5) engages with the first hook edge (5) of the base body (2) if the screen body is suspended from the suspension edge (4) via the suspension hook (11), and the free position in which the first hook edge (5) is free from the first hook edge (5) if the screen body (3) is suspended from the suspension edge (4) via the suspension hook (11).

8. System according to Claim 7, wherein the second hook edge (13) is displaceable with respect to the suspension hook (11) from the free position to a waiting position, in which waiting position the retaining body (12) has a different orientation than in the retaining position, and wherein, due to the base body (2) acting as a stop for the retaining body (12), the retaining body (12) is configured to displace the retaining hook from the waiting position to the retaining position at least partly in a swinging manner.

9. System according to Claim 8, wherein the waiting position is situated between the retaining position and the free position.

10. System according to to Claim 8 or 9, wherein the guided member (18) is configured to cooperate with the guide (17) during displacement of the retaining hook from the free position to the waiting position in such a way that the orientation of the retaining body (12) changes during said displacement.

11. System according to one of Claims 7 to 10, wherein the screen body (3) comprises an elongate tensioning element (19) which is connected to the retaining body (12) for pulling the retaining body (12) from the retaining position to the free position counter to the action of the spring member (15), the tensioning element (19) preferably being connected to the retaining body (12) by means of a click-fit connection.

12. System according to Claim 3 or a claim dependent thereon and according to Claim 11, wherein the tensioning element (19) partly extends between the two resilient lips (15a, 15b).

13. System according to one of the preceding claims, wherein the screen body comprises a first screen body part (7) and a second screen body part (8) which is tiltably connected to the first screen body part (7), the system comprising a locking mechanism for locking a tilting position of the second screen body part, the locking mechanism comprising a bracket (30) which, on one side, is hingably connected to one of the first screen body part (7) and the second screen body part (8) and, on the other side, extends in a slotted hole (32) through which the second end moves during tilting of the second screen body part (8) with respect to the first screen body part (7), the locking mechanism furthermore comprising a locking body (34) for locking the bracket (30), at its second end, to a desired longitudinal position inside the slotted hole (32).

14. System according to Claim 13, wherein the locking body (34) comprises an eccentric body (34) which is connected to the bracket (30) so as to be swivelable between a locking position and a non-locking position and which, in the locking position, presses the bracket (30) or at least a part connected thereto against a part of the peripheral edge of the slotted hole (32) in order to prohibit displacement of the bracket (30) inside the slotted hole (32), and which, in the non-locking position, leaves the bracket (30) or at least a part connected thereto free from the peripheral edge of the slotted hole (32) in order to allow displacement of the bracket (30) inside the slotted hole (32), the slotted hole (32) preferably comprising a number of recesses (33) for accommodating the bracket (30) or at least a part connected thereto in the locking position of the eccentric body (34).

## Patentansprüche

1. System (1; 51) zum Positionieren eines Betrachtungsschirms, umfassend einen Basiskörper (2; 58), einen Bildschirmkörper (3; 59), der einerseits dazu ausgelegt ist, mindestens in einer Position des Bildschirmkörpers starr mit dem Basiskörper (2; 58) verbunden zu sein, und andererseits dazu ausgelegt ist, einen Bildschirm daran zu befestigen, und einen Haltekörper (12; 82) zum lösbaren Halten der starren Verbindung zwischen dem Basiskörper (2; 58) und dem Bildschirmkörper (3; 59), wobei einer des Basiskörpers (2; 58) und des Bildschirmkörpers (3; 59) eine erste Hakenkante (5; 98) aufweist und der Haltekörper (12; 81) eine zweite Hakenkante (13; 95) aufweist, wobei die zweite Hakenkante (13; 95) in Bezug auf den anderen des Basiskörpers (2; 58) und des Bildschirmkörpers (3; 59) zwischen einer Halteposition, in der die erste Hakenkante (5; 95) und der zweiten Hakenkante (13; 98), wodurch oder mindestens teilweise wodurch der Bildschirmkörper (3; 59) starr mit dem Basiskörper (2; 58) verbunden ist, und einer freien Position verschiebbar ist, in der die erste Hakenkante (5; 95) und die zweite Hakenkante (13; 98) so weit voneinander entfernt sind, dass der Bildschirmkörper (3; 59) in Bezug auf den Basiskörper (2; 58) verschiebbar ist; wobei das System (1; 51) ferner ein Federelement (15; 89) umfasst, das dazu betriebsfähig ist, einer Verschiebung der zweiten Hakenkante (13; 89) aus der Halteposition in die freie Position zu widerstehen, wobei das Federelement (15; 89) und die zweite Hakenkante (13; 89) einen einstückigen Teil des Haltekörpers (12, 81) bilden,
**dadurch gekennzeichnet, dass**
der Haltekörper (12; 82) eine Führung (17; 85, 86) aufweist und der andere des Basiskörpers (2; 58) und des Bildschirmkörpers (3; 59) ein geführtes Element (18; 83, 84) aufweist, das dazu ausgelegt ist, mit der Führung (17; 85, 86) während der Verschiebung der verschiebbaren zweiten Hakenkante (13; 95) aus der Halteposition in die freie Position zusammenzuwirken.

2. System gemäß Anspruch 1, wobei das Federelement mindestens eine elastische Lippe (15; 89) umfasst.

3. System gemäß Anspruch 2, wobei das Federelement zwei elastische Lippen (15a, 15b; 89a, 89b) umfasst.

4. System gemäß Anspruch 3, wobei die zwei elastischen Lippen (15a, 15b; 89a, 89b) auf den voneinander abgewandten Seiten mit Vorsprüngen (16a, 16b; 91a, 91b) versehen sind, die sich in Ausnehmungen (14; 93) in Schenkeln eines im Querschnitt U-förmigen Teils des anderen des Basiskörpers (2; 58) und des Bildschirmkörpers (3; 59) erstrecken.

5. System gemäß einem der vorhergehenden Ansprüche, wobei der Haltekörper (12; 82) auf zwei einander gegenüberliegenden Seiten jeweils eine Führung (17a, 17b; 85a, 85b, 86a, 86b) umfasst und wobei der jeweils andere des Basiskörpers (2; 58) und des Bildschirmkörpers (3; 59) ein geführtes Element (18a, 18b; 83a, 83b, 84a, 84b) für jede Führung (17a, 17b; 85a, 85b, 86a, 86b) aufweist, wobei sich die zwei geführten Elemente (18a, 18b; 83a, 83b, 84a, 84b) vorzugsweise von Schenkeln eines im Querschnitt U-förmigen Teils des anderen des Basiskörpers (2; 58) und des Bildschirmkörpers (3; 59) aufeinander zu erstrecken.

6. System gemäß einem der vorhergehenden Ansprüche, wobei der Haltekörper (12; 82) in der freien Position und in der Halteposition die gleiche Ausrichtung aufweist.

7. System gemäß einem der vorhergehenden Ansprüche, wobei der Basiskörper (2) die erste Hakenkante (5) und eine Aufhängekante (4) umfasst, und der Bildschirmkörper (3) einen Aufhängehaken (11) zum Aufhängen des Bildschirmkörpers (3) an der Aufhängekante (4) des Basiskörpers (2) über den Aufhängehaken (11) umfasst, und wobei der Haltekörper (12) in Bezug auf den Aufhängehaken (11) zwischen der Halteposition, in der die erste Hakenkante (5) mit der ersten Hakenkante (5) des Basiskörpers (2) in Eingriff steht, wenn der Bildschirmkörper über den Aufhängehaken (11) an der Aufhängekante (4) aufgehängt ist, und der freien Position, in der die erste Hakenkante (5) frei von der ersten Hakenkante (5) ist, wenn der Bildschirmkörper (3) über den Aufhängehaken (11) an der Aufhängekante (4) aufgehängt ist, verschiebbar ist.

8. System gemäß Anspruch 7, wobei die zweite Hakenkante (13) in Bezug auf den Aufhängehaken (11) aus der freien Position in eine Warteposition verschiebbar ist, in der der Haltekörper (12) eine andere Ausrichtung als in der Halteposition aufweist, und wobei der Haltekörper (12) aufgrund des als Anschlag für den Haltekörper (12) wirkenden Basiskörpers (2) dazu ausgelegt ist, den Aufhängehaken mindestens teilweise schwingend aus der Warteposition in die Halteposition zu verschieben.

9. System gemäß Anspruch 8, wobei sich die Warteposition zwischen der Halteposition und der freien Position befindet.

10. System gemäß Anspruch 8 oder 9, wobei das geführte Element (18) dazu ausgelegt ist, mit der Führung (17) während der Verschiebung des Haltehakens aus der freien Position in die Warteposition so zusammenzuwirken, dass sich die Ausrichtung des Haltekörpers (12) während dieser Verschiebung ändert.

11. System gemäß einem der Ansprüche 7 bis 10, wobei der Bildschirmkörper (3) ein längliches Spannelement (19) umfasst, das mit dem Haltekörper (12) verbunden ist, um den Haltekörper (12) entgegen der Wirkung des Federelements (15) aus der Halteposition in die freie Position zu ziehen, wobei das Spannelement (19) vorzugsweise mittels einer Rastverbindung mit dem Haltekörper (12) verbunden ist.

12. System gemäß Anspruch 3 oder einem davon abhängigen Anspruch und gemäß Anspruch 11, wobei sich das Spannelement (19) teilweise zwischen den zwei elastischen Lippen (15a, 15b) erstreckt.

13. System gemäß einem der vorhergehenden Ansprüche, wobei der Bildschirmkörper einen ersten Bildschirmkörperteil (7) und einen kippbar mit dem ersten Bildschirmkörperteil (7) verbundenen zweiten Bildschirmkörperteil (8) umfasst, wobei das System einen Verriegelungsmechanismus zum Verriegeln einer Kippposition des zweiten Bildschirmkörperteils umfasst, wobei der Verriegelungsmechanismus einen Bügel (30) umfasst, der auf einer Seite schwenkbar mit einem des ersten Bildschirmkörperteils (7) und des zweiten Bildschirmkörperteils (8) verbunden ist und sich auf der anderen Seite in einem Langloch (32) erstreckt, durch das sich das zweite Ende während des Kippens des zweiten Bildschirmkörperteils (8) in Bezug auf das erste Bildschirmkörperteil (7) bewegt, wobei der Verriegelungsmechanismus ferner einen Verriegelungskörper (34) zum Verriegeln des Bügels (30) an seinem zweiten Ende in einer gewünschten Längsposition innerhalb des Langlochs (32) umfasst.

14. System gemäß Anspruch 13, wobei der Verriegelungskörper (34) einen exzentrischen Körper (34) umfasst, der mit dem Bügel (30) so verbunden ist, dass er zwischen einer Verriegelungsposition und einer Nicht-Verriegelungsposition schwenkbar ist, und der in der Verriegelungsposition den Bügel (30) oder mindestens einen damit verbundenen Teil gegen einen Teil der Umfangskante des Langlochs (32) drückt, um eine Verschiebung des Bügels (30) innerhalb des Langlochs (32) zu verhindern, und der in der Nicht-Verriegelungsposition den Bügel (30) oder mindestens einen damit verbundenen Teil frei von der Umfangskante des Langlochs (32) lässt, um eine Verschiebung des Bügels (30) innerhalb des Langlochs (32) zu ermöglichen, wobei das Langloch (32) vorzugsweise eine Anzahl von Ausnehmungen (33) zum Aufnehmen des Bügels (30) oder mindestens eines damit verbundenen Teils in der Verriegelungsposition des exzentrischen Körpers (34) umfasst.

## Revendications

1. Système (1 ; 51) de positionnement d'un écran de visualisation, comprenant un corps de base (2 ; 58), un corps d'écran (3 ; 59) qui, d'une part, est configuré pour être relié rigidement, au moins dans une position du corps d'écran, au corps de base (2 ; 58) et, d'autre part, est configuré pour fixer un écran de visualisation à celui-ci, et un corps de retenue (12 ; 82) pour retenir de manière amovible la liaison rigide entre le corps de base (2 ; 58) et le corps d'écran (3 ; 59), dans lequel l'un parmi le corps de base (2 ; 58) et le corps d'écran (3 ; 59) a un premier bord à crochet (5 ; 98) et le corps de retenue (12 ; 81) a un deuxième bord à crochet (13 ; 95), dans lequel le deuxième bord à crochet (13 ; 95) peut être déplacé par rapport à l'autre parmi le corps de base (2 ; 58) et le corps d'écran (3 ; 59) entre une position de retenue dans laquelle le premier bord à crochet (5; 95) et le deuxième bord à crochet (13; 98) s'engagent l'un avec l'autre, à la suite de quoi ou au moins partiellement à la suite de quoi le corps d'écran (3 ; 59) est relié rigidement au corps de base (2 ; 58), et une position libre dans laquelle le premier bord à crochet (5 ; 95) et le deuxième bord à crochet (13 ; 98) sont suffisamment libres l'un par rapport à l'autre pour que le corps d'écran (3 ; 59) puisse être déplacé par rapport au corps de base (2 ; 58), le système (1 ; 51) comprenant en outre un élément de ressort (15 ; 89) qui fonctionne pour résister au déplacement du deuxième bord à crochet (13 ; 89) de la position de retenue à la position libre, dans lequel l'élément de ressort (15 ; 89) et le deuxième bord à crochet (13 ; 89) font partie intégrante du corps de retenue (12, 81),
**caractérisé en ce que**
le corps de retenue (12 ; 82) a un guide (17 ; 85, 86) et l'autre parmi le corps de base (2 ; 58) et le corps d'écran (3 ; 59) a un élément guidé (18 ; 83, 84) qui est configuré pour coopérer avec le guide (17 ; 85, 86) pendant le déplacement du deuxième bord à crochet déplaçable (13 ; 95) de la position de retenue à la position libre.

2. Système selon la revendication 1, dans lequel l'élément de ressort comprend au moins une lèvre élastique (15 ; 89).

3. Système selon la revendication 2, dans lequel l'élément de ressort comprend deux lèvres élastiques (15a, 15b ; 89a, 89b).

4. Système selon la revendication 3, dans lequel les deux lèvres élastiques (15a, 15b ; 89a, 89b), sur les côtés opposés l'un à l'autre, sont munies de protubérances (16a, 16b; 91a, 91b) qui s'étendent dans des évidements (14 ; 93) dans les branches d'une partie, qui est en forme de U en coupe transversale, de l'autre parmi le corps de base (2 ; 58) et le corps d'écran (3 ; 59).

5. Système selon l'une des revendications précédentes, dans lequel le corps de retenue (12 ; 82), sur chacun de ses deux côtés mutuellement opposés, comprend un guide (17a, 17b ; 85a, 85b, 86a, 86b) et dans lequel l'autre parmi le corps de base (2 ; 58) et le corps d'écran (3 ; 59) a un élément guidé (18a, 18b ; 83a, 83b, 84a, 84b) pour chaque guide (17a, 17b ; 85a, 85b, 86a, 86b), les deux éléments guidés (18a, 18b ; 83a, 83b, 84a, 84b) s'étendant de préférence l'un vers l'autre à partir des branches d'une partie, qui est en forme de U en coupe transversale, de l'autre parmi le corps de base (2 ; 58) et le corps d'écran (3 ; 59).

6. Système selon l'une des revendications précédentes, dans lequel le corps de retenue (12 ; 82) a la même orientation en position libre et en position de retenue.

7. Système selon l'une des revendications précédentes, dans lequel le corps de base (2) comprend le premier bord à crochet (5) et un bord de suspension (4), et le corps d'écran (3) comprend un crochet de suspension (11) pour suspendre le corps d'écran (3) au bord de suspension (4) du corps de base (2) via le crochet de suspension (11), et dans lequel le corps de retenue (12) peut être déplacé par rapport au crochet de suspension (11) entre la position de retenue dans laquelle le premier bord à crochet (5) s'engage avec le premier bord à crochet (5) du corps de base (2) si le corps d'écran est suspendu au bord de suspension (4) via le crochet de suspension (11), et la position libre dans laquelle le premier bord à crochet (5) est libre par rapport au premier bord à crochet (5) si le corps d'écran (3) est suspendu au bord de suspension (4) via le crochet de suspension (11).

8. Système selon la revendication 7, dans lequel le deuxième bord à crochet (13) peut être déplacé par rapport au crochet de suspension (11) de la position libre à une position d'attente, dans laquelle position d'attente le corps de retenue (12) a une orientation différente que dans la position de retenue, et dans lequel, du fait que le corps de base (2) agit comme une butée pour le corps de retenue (12), le corps de retenue (12) est configuré pour déplacer le crochet de retenue de la position d'attente à la position de retenue au moins en partie de manière oscillante.

9. Système selon la revendication 8, dans lequel la position d'attente est située entre la position de retenue et la position libre.

10. Système selon la revendication 8 ou 9, dans lequel l'élément guidé (18) est configuré pour coopérer avec le guide (17) lors du déplacement du crochet de retenue de la position libre à la position d'attente de sorte que l'orientation du corps de retenue (12) change pendant ledit déplacement.

11. Système selon l'une des revendications 7 à 10, dans lequel le corps d'écran (3) comprend un élément tendeur allongé (19) qui est relié au corps de retenue (12) pour tirer le corps de retenue (12) de la position de retenue vers la position libre à l'encontre de l'action de l"élément de ressort (15), l'élément tendeur (19) étant de préférence relié au corps de retenue (12) au moyen d'une liaison par encliquetage.

12. Système selon la revendication 3 ou une revendication qui en dépend et selon la revendication 11, dans lequel l'élément tendeur (19) s'étend en partie entre les deux lèvres élastiques (15a, 15b).

13. Système selon l'une des revendications précédentes, dans lequel le corps d'écran comprend une première partie de corps d'écran (7) et une deuxième partie de corps d'écran (8) qui est reliée de manière inclinable à la première partie de corps d'écran (7), le système comprenant un mécanisme de verrouillage pour verrouiller une position d'inclinaison de la deuxième partie de corps d'écran, le mécanisme de verrouillage comprenant une patte de fixation (30) qui, d'un côté, est reliée de manière articulée à l'une de la première partie de corps d'écran (7) et de la deuxième partie de corps d'écran (8) et, de l'autre côté, s'étend dans un trou oblong (32) à travers lequel la deuxième extrémité se déplace lors de l'inclinaison de la deuxième partie de corps d'écran (8) par rapport à la première partie de corps d'écran (7), le mécanisme de verrouillage comprenant en outre un corps de verrouillage (34) pour verrouiller la patte de fixation (30), au niveau de sa deuxième extrémité, dans une position longitudinale souhaitée à l'intérieur du trou oblong (32).

14. Système selon la revendication 13, dans lequel le corps de verrouillage (34) comprend un corps excentrique (34) qui est relié à la patte de fixation (30) de manière à pouvoir pivoter entre une position de verrouillage et une position de non verrouillage et qui, dans la position de verrouillage, presse la patte de fixation (30) ou au moins une partie qui lui est reliée contre une partie du bord périphérique du trou oblong (32) pour empêcher le déplacement de la patte de fixation (30) à l'intérieur du trou oblong (32), et qui, dans la position de non verrouillage, laisse la patte de fixation (30) ou au moins une partie qui lui est reliée libre par rapport au bord périphérique du trou oblong (32) afin de permettre le déplacement de la patte de fixation (30) à l'intérieur du trou oblong (32), le trou oblong (32) comprenant de préférence un certain nombre d'évidements (33) pour recevoir la patte de fixation (30) ou au moins une partie qui lui est reliée dans la position de verrouillage du corps excentrique (34).
